(19) **Europäisches Patentamt / European Patent Office / Office européen des brevets**

(11) **EP 2 112 621 A2**

(12) # EUROPEAN PATENT APPLICATION

(43) Date of publication:
**28.10.2009 Bulletin 2009/44**

(51) Int Cl.:
**G06N 3/00** (2006.01)

(21) Application number: **08019710.6**

(22) Date of filing: **11.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.04.2008 KR 20080037971**

(71) Applicant: **Korea Advanced Institute of Science and Technology**
**Daejeon, 305-701 (KR)**

(72) Inventors:
• **Kwon, Dong Soo**
  **Daejeon, 305-701 (KR)**
• **Kim, Young Min**
  **Daejeon, 305-701 (KR)**

(74) Representative: **TER MEER - STEINMEISTER & PARTNER GbR**
**Patentanwälte**
**Mauerkircherstrasse 45**
**81679 München (DE)**

(54) **Apparatus for forming good feeling of robot and method therefor**

(57) An apparatus for forming good feeling of a robot and a method therefor are disclosed. The apparatus for forming good feeling of a robot according to the present invention comprises: a good feeling generating unit receiving an input feature value of a user to calculate an individual intimacy level between the robot and the user and calculate a tension level formed between the robot (r) and the user (i) in relation to other users, thereby calculating the good feeling of the robot with regard to the user; a good feeling expressing unit adjusting intensity of feeling of the robot according to the good feeling of the robot generated through the good feeling generating unit and additionally expressing an action expressing the good feeling before and after an action of the robot; and a good feeling learning unit receiving an expression degree of the good feeling of the robot with regard to the user calculated through the good feeling expressing unit and an emotional reaction of the user to calculate profit using an difference between these two information and updating the input feature value of the user using the profit.

Fig.1

EP 2 112 621 A2

**Description**

BACKGROUND OF THE INVENTION

This application claims priority to Korean Patent Application No. 2008-0037971, filed on April 24, 2008, in the Korean Intellectual Property Office, the entire contents of which are hereby incorporated by reference.

1. Field of the Invention

The present invention relates to an apparatus for evaluating and expressing good feeling of a robot with regard to a user and learning the good feeling through reaction of the user and a method therefor, and more specifically to an apparatus for receiving control range and belonging feeling information, etc., of a user to calculate an intimacy level for the user, finally estimating the good feeling through a relation with other users to express the good feeling through an appropriate action and feeling expression, and receiving the reaction of the user thereto through touch and voice to learn the good feeling and a method therefor.

2. Description of the Related Art

Recently, as a pet robot, a cleaning robot, an educational robot, etc., have actively been used in a daily life of users, studies intended to allow the users to have emotionally intimate feelings with the robot have become important. Particularly, studies recognizing user's intimate feeling (feeling state) with regard to the robot and raising reliability of the robot through an appropriate feeling expression similar to humans have actively been progressed in a field of HRI (Human Robot Interaction).

In this context, studies wherein the robot actively forms a relation with humans by also generating and actively expressing good feeling with regard to the user are important. However, studies on a method that the robot efficiently expresses its good feeling to the user and a method that the robot suitably learns the good feeling according to a continuous reaction of the user are insufficient around the world.

SUMMARY OF THE INVENTION

The present invention has been proposed to solve the problem. It is an object of the present invention to provide an apparatus for forming good feeling of a robot for calculating an intimacy level between the robot and a user, calculating a tension level of a sentimental relation between the robot and a plurality of users to generate the good feeling of the robot, and updating the intimacy level with the user according to reaction of the user, thereby suitably learning the good feeling according to a continuous reaction of the user and a method therefor.

In order to accomplish the object, an apparatus for forming good feeling of a robot according to the present invention comprises: a good feeling generating unit receiving an input feature value of a user to calculate an individual intimacy level between the robot and the user and calculate a tension level $B_{ri}$ formed between the robot (r) and the user (i) in relation to other users, thereby calculating the good feeling of the robot with regard to the user; a good feeling expressing unit adjusting intensity of feeling of the robot according to the good feeling of the robot generated through the good feeling generating unit and additionally expressing an action expressing the good feeling before and after an action of the robot; and a good feeling learning unit receiving an expression degree of the good feeling of the robot with regard to the user calculated through the good feeling expressing unit and an emotional reaction of the user to calculate profit using an difference between these two information and updating the input feature value of the user using the profit.

According to another aspect, there is provided a method for forming good feeling of a robot comprising the steps of: (a) receiving and registering an input feature value about a control range degree and a belonging feeling degree of the user by a good feeling generating unit 100; (b) calculating an intimacy level $m_{ri}$ for each class of vector positions of the input feature value by the good feeling generating unit 100; (c) setting the intimacy level between a first registered user and an already registered user to calculate a tension level $B_{ri}$ formed by the robot (r) and the user (i) with relation to other users by the good feeling generating unit 100; (d) calculating the good feeling $L_i$ of the robot with regard to the user using the individual intimacy level between the robot and the user calculated through the step (b) and the tension level calculated through the step (c) by the good feeling generating unit 100; (e) adjusting intensity of feeling and a stereotyped action of the robot according to the good feeling of the robot calculated through the good feeling generating unit 100 to express the good feeling by a good feeling expressing unit 200; (f) receiving an emotional reaction of the user through voice information or touch information of the user by a good feeling learning unit 300; (g) calculating profit using an expression degree of the good feeling of the robot with regard to the user calculated through the good feeling expressing unit 200 and the emotional reaction of the user by the good feeling learning unit 300; and (h) updating the input feature value of the user from the calculated profit by the good feeling learning unit 300.

According to the present invention as above, it is possible to provide a discriminative service different from other users by allowing the robot to have the good feeling with regard to the user through a continuous service-based interaction of the robot and the user.

For example, when various users are together within a dwelling space, the robot may approach a user with a high level of good feeling by itself by following a line of sight of the user or maximizing and expressing intensity of feeling. At the time of being called by a user without the high level of good feeling, the robot expresses an intention of avoiding interaction through stereotyped actions such as avoidance, hesitation, study of user's face, etc., so that it may be appreciated as a robot well accordant to the user with the relatively high level of good feeling.

And, according to the present invention, a function of the robot may actively be utilized in a service region as well as, home entertainment and education, etc.

BRIEF DESCRIPTION OF THE DRAWINGS

The above and other objects, features and advantages of the present invention will become apparent from the following description of preferred embodiments given in conjunction with the accompanying drawings, in which:

FIG. 1 is an overall configuration view of an apparatus R for forming good feeling of a robot according to one embodiment of the present invention;

FIG. 2 is one exemplary view showing an FMMNN hyper box model constituted by an input feature value of a user according to one embodiment of the present invention;

FIG. 3 is one exemplary view showing a sentimental relation network according to a tension level between a robot and a plurality of users according to one embodiment of the present invention;

FIG. 4 is one exemplary view showing an aspect in which a belonging value is again calculated according to a feature vector updated in the hyper box so that an intimacy level value is updated according to one embodiment of the present invention; and

FIG. 5 is an overall flow chart of a method for forming good feeling of the robot according to one embodiment of the present invention.

DETAILED DESCRIPTION OF THE INVENTION

Specific features and benefits of the present invention will become obvious by means of a following detailed description with reference to accompanying drawings. It should be noted that in the case where it is judged that a specific description for a known function associated with the present invention and a configuration thereof may unnecessarily obscure the gist of the present invention, it will be omitted.

Hereinafter, the present invention will be described with reference to accompanying drawings.

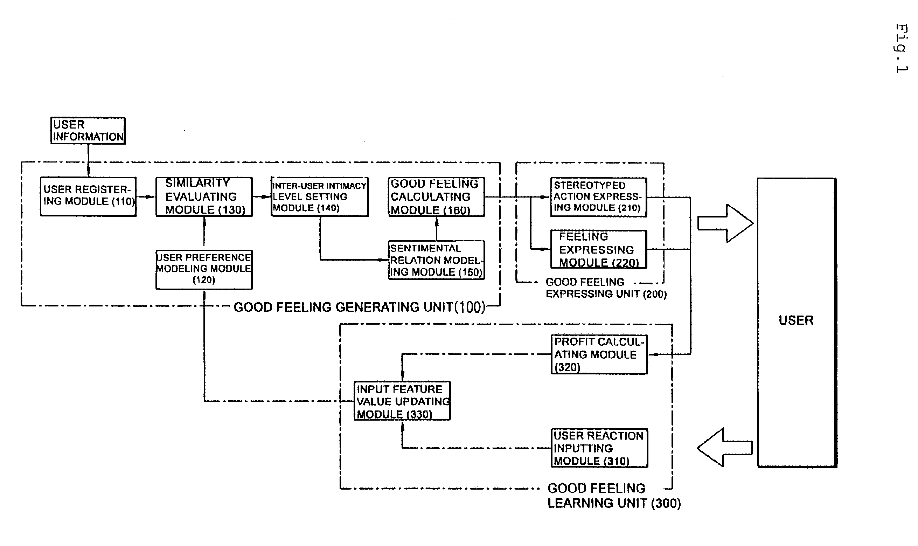

An apparatus for forming good feeling of a robot and a method therefor according to one embodiment of the present invention will be described with reference to FIGS. 1 to 5.

FIG. 1 is an overall configuration view of an apparatus R for forming good feeling of a robot according to one embodiment of the present invention. The apparatus is entirely constituted by a good feeling generating unit 100, a good feeling expressing unit 200, and a good feeling learning unit 300.

The good feeling generating unit 100 according to the present invention performs a function of receiving an input feature value of a user to calculate an individual intimacy level between the robot and the user and calculate a tension level ($B_{ri}$) formed between the robot (r) and the user (i) in relation to other users, thereby calculating the good feeling of the robot with regard to the user. The good feeling generating unit 100 comprises a user registering module 110, a user preference modeling module 120, a similarity evaluating module 130, an inter-user intimacy level setting module 140, a sentimental relation modeling module 150, and a good feeling calculating module 160.

More specifically, the user registering module 110 performs a function of receiving and registering the input feature value about a degree of control range and a degree of belonging feeling, etc., of the user. The input feature value, which means 'user information' comprising the degree of control range of the user with regard to the robot and the degree of belonging of the user and the robot, is converted into a real value of [0, 1] and input and registered by the user registering module 110. For example, in the case of the owner of the robot, the input feature value may be input as f=(1, 1) for representing a user with a high degree of control range and a high degree of belonging feeling, and in the case of a guest, it may be input as f=(0.2, 0.5) for representing a user with a low degree of control range and an intermediate degree of belonging feeling by the user registering module 110.

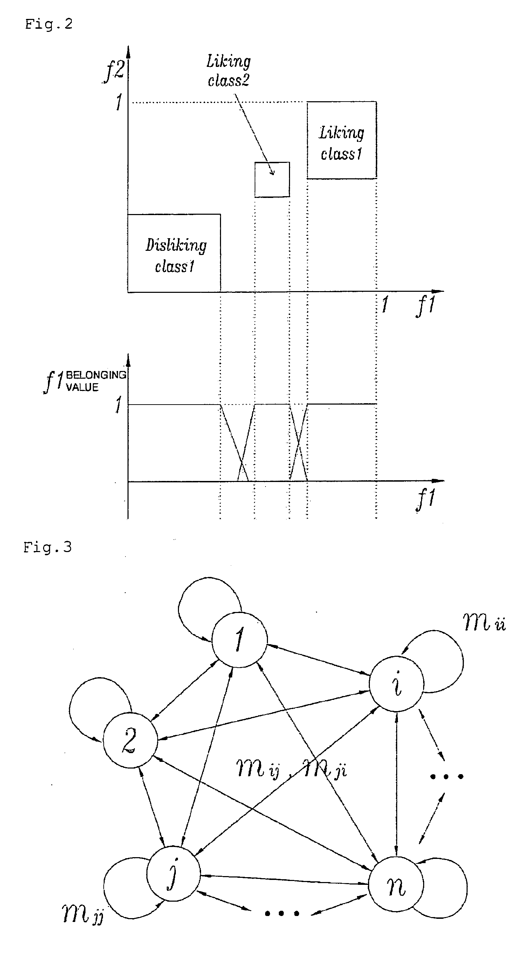

The user preference modeling module 120 performs a function of storing a user model preferred by the robot, and is constituted by an FMMNN hyper box model made of the input feature value. That is, the input feature value is formed as a hyper box with regard to a class with a high preference (liking class, c1) and a class with a low preference (disliking class, c2) as shown in FIG. 2.

The similarity evaluating module 130 performs a function of calculating a belonging value for each class of vector positions of the input feature value, that is, the intimacy level $m_{ri}$.

[Equation. 1]

$$m_{ri} = \max\{\max_s(m_s^{c1}), \max_k(m_k^{c2})\}$$

The inter-user intimacy level setting module 140 performs a function of setting the intimacy level between a first registered user and an already registered user. That is, it receives the intimacy level between the first registered user and the already registered user (for example, a favorite person is input as +1, an unfavorite person is input as -1, and an unknown person is input as 0).

Thereafter, the intimacy level may be updated using a physical distance, the number of interactions, and a variation in a social relation, etc., between the users. For example, when the number of the interactions simultaneously made by the two users around the robot increases and a conversation distance between the two users becomes close, the robot may predict that the intimacy level between the two users is high.

The sentimental relation modeling module 150 performs a function of receiving the intimacy level between the first registered user and the already registered user, that is, the intimacy level between the users from the inter-user intimacy level setting module 140 to calculate a social tension level $B_{ri}$ formed by the robot (r) and the user (i) with relation to other users within a sentimental relation network, as shown in FIG. 3. In the present invention, the social tension level ($B_{ri}$) is calculated by Equation. 2 below.

[Equation. 2]

$$\Rightarrow B_{ri} = \frac{\sum_{i=1(k \neq r)}^{n} \{G_{Dyad}(i) + \sum_{j=1(i \neq r, i)}^{n} G_{Triad}(i, j)\}}{(n-1)^2},$$

where,

$$G_{Dyad}(i) = \begin{cases} +1, & if\ \operatorname{sgn}(m_{ri} \times m_{ir}) > 0 \\ 0, & otherwise \end{cases}$$

$$G_{Triad}(i, j) = \begin{cases} +1, & if\ G_{Dyad}(i) = +1\ \&\ \operatorname{sgn}\left(m_{ri} \times m_{ij} \times m_{jr}\right) > 0 \\ 0, & otherwise \end{cases}$$

Wherein, *n* is total numbers of interacting individuals, i.e. *n* = robot + (*n-1*) users;

*mab* is an intimacy level felt by *a* with regard to b. It is converted into a real value of [-1, +1] and is input. For example, unfavorite: -1, favorite: +1, unknown: 0;

*mri* is an intimacy level felt by the robot (*r*) with regard to the user (*i*);

*mir* is an intimacy level felt by the user (i) with regard to the robot (*r*);

*GDyad*(*i*) is a balance index in a sentimental relation between the robot and the user (*i*). For example, if it is +1, it is a balance state, and if it is 0, it is an unbalance state;

*GTriad*(*i*, *j*) is a balance index in a sentimental relation between the robot and the users (*i*, *j*). For example, if it is 1, it is a balanced state, and if it is 0, it is an unbalanced state;

*Bri* is a balance degree of social tension formed by the robot (*r*) and the user (*i*) with relation to other users; i.e., balance related node numbers with regard to overall related node numbers. That is, when it is close to 1, it may be judged that the social sentimental relation between the robot and the user (*i*) has well been balanced.

The good feeling calculating module 160 performs a function of calculating good feeling $L_i$ of the robot with regard to the user via applying the individual intimacy level between the robot and the user calculated through the similarity evaluating module 130 and the tension level calculated through the sentimental relation modeling module 150 to Equation. 3 below.

[Equation. 3]

$$L_i = f(m_{ri}, B_{ri})$$
$$= \underbrace{\lambda \cdot m_{ri}}_{\substack{\text{term measuring intimacy} \\ \text{of interpersonal} \\ \text{relationship}}} + \underbrace{(1-\lambda)B_{ri}}_{\substack{\text{term measuring tension} \\ \text{of relationship} \\ \text{in social group}}}$$

Wherein,

$L_i$(=[0, 1]) is the good feeling of the robot with regard to the user ($i$); and $\lambda$ (=[0, 1]) represents a weight of an effect of two variables on the good feeling.

The good feeling expressing unit 200 performs a function of adjusting intensity of feeling of the robot according to the good feeling of the robot generated through the good feeling generating unit 100 and additionally expressing an action expressing the good feeling before and after an action of the robot. The good feeling expressing unit 200 comprises a stereotyped action expressing module 210 and a feeling expressing module 220.

More specifically, the stereotyped action expressing module 210 performs a function of additionally expressing an action expressing the good feeling before and after the action of the robot. Herein, the stereotyped action, which represents a fixed action defined to be able to express a personality or a feeling state of the robot before and after a main action for performing service of the robot, is to allow the robot to freely express its sentimental intention to the user without having an effect on the service. That is, at the time of being called by an unfavorite user, before performing a service action approaching the user, a previous stereotyped action named 'study of user's face' is input and after arriving at the user, a post stereotyped action named 'sight line avoidance' is input, thereby making it possible to express the good feeling of the robot.

The feeling expressing module 220 adjusts and expresses intensity of the feeling generated in a feeling generating module by a current event according to a level of the good feeling to show the good feeling, wherein the intensity of the feeling is determined by a rule below:

'When the good feeling $L_i$ of the robot with regard to the user ($i$) is positively high, a positive feeling is enhanced and a negative feeling is weakened. Also, when the good feeling $L_i$ of the robot with regard to the user ($i$) is negatively high, a positive feeling is weakened and a negative feeling is enhanced.'

The good feeling learning unit 300 performs a function of receiving an expression degree of the good feeling of the robot with regard to the user calculated through the good feeling expressing unit 200 and an emotional reaction of the user to calculate profit using a difference between these two information and updating the input feature value of the user using the profit. The good feeling learning unit 300 comprises a user reaction inputting module 310, a profit calculating module 320, and an input feature value updating module 330.

More specifically, the user reaction inputting module 310 performs a function of receiving an emotional reaction of the user through voice information or touch information, etc., of users, and recognizes feeling states of the users as gladness, anger, or indifference and evaluates and divides the feeling states of the users into a positive reward and a negative punishment.

The profit calculating module 320 performs a function of calculating the profit via using the expression degree of the good feeling calculated through the good feeling expressing unit 200 and the emotional reaction of the user comprising the voice information or the touch information, etc., of the user input through the user reaction inputting module 310. That is, it calculates the profit via using an effort made by the robot in order to perform the service and the emotional reaction of the user with regard to the effort.

At the time of call by the user, the effort of the robot is calculated as the number of steps of the action to be taken by the robot in order to approach to the user. Also, after obtaining the emotional reaction of the user from the touch and the voice after approaching the user, if a recognized feeling is 'happiness', it is calculated as a positive reward, and if it is 'anger' , it is calculated as a negative punishment.

The two values are normalized as a real numbers between [-1 and 1], and the profit with regard to the action of the robot is determined through Equation. 4 below.

[Equation. 4]

$$p = r - c$$

Wherein, $p$ represents the profit of the robot, $r$ represents a reward degree of the reaction from the user, and $c$ represents an effort degree with regard to the service performed by the robot, respectively.

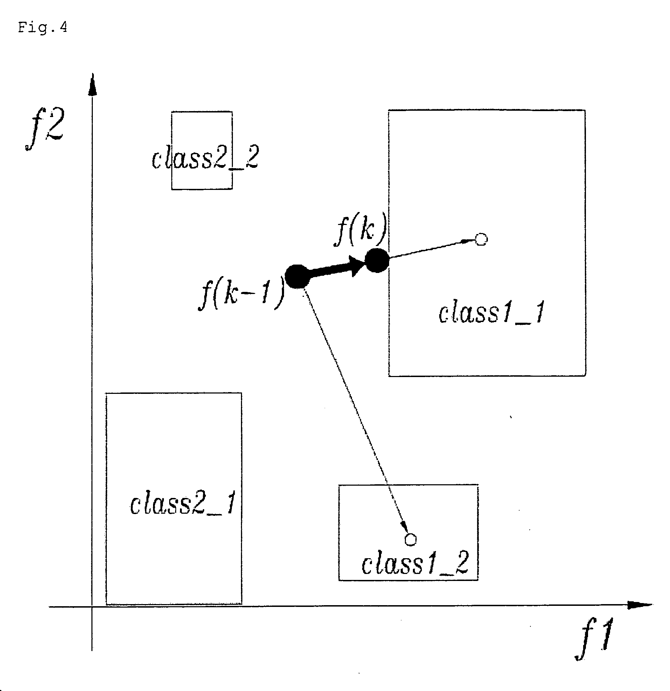

The input feature value updating module 330 performs a function of updating the input feature value of the user from the profit calculated through the profit calculating module 320. That is, the updating is made by an incremental learning method using the profit ($p$) calculated through the profit calculating module 320. As in Equation. 5 below, the $p$ value is input so that a position on the hyper space of the control range $f1$ and the belonging feeling $f2$, which are the user input information, is updated, thereby obtaining a new intimacy level value. As shown in FIG. 4, an updated feature vector moves toward a target hyper box. At this time, a belonging value is again calculated so that the intimacy value is updated.

[Equation.5]

$$f(k) \leftarrow f(k-1) + \alpha W \{ C_{J\_I} - f(k-1) \}$$
$$-f : \text{Feature vector}(F_1 : \text{Power}, F_2 : \text{Unity})$$
$$-\alpha = \frac{1}{1 + |T_p - T_n|};$$
$$-T_p : \text{positive reward steps}$$
$$-T_n : \text{negative reward steps}$$
$$-T_p + T_n = k$$
$$-W = |r - e|$$
$$-J = \begin{cases} p, if (r-e) > 0 \\ n, otherwise \end{cases}, I = \arg \min_i |C_{J\_i} - F(k-1)|$$

where, $r$ : rewards, $e$ : action efforts,
$C_{j\_i}$ : center position vector of i-th hyperbox of j-class

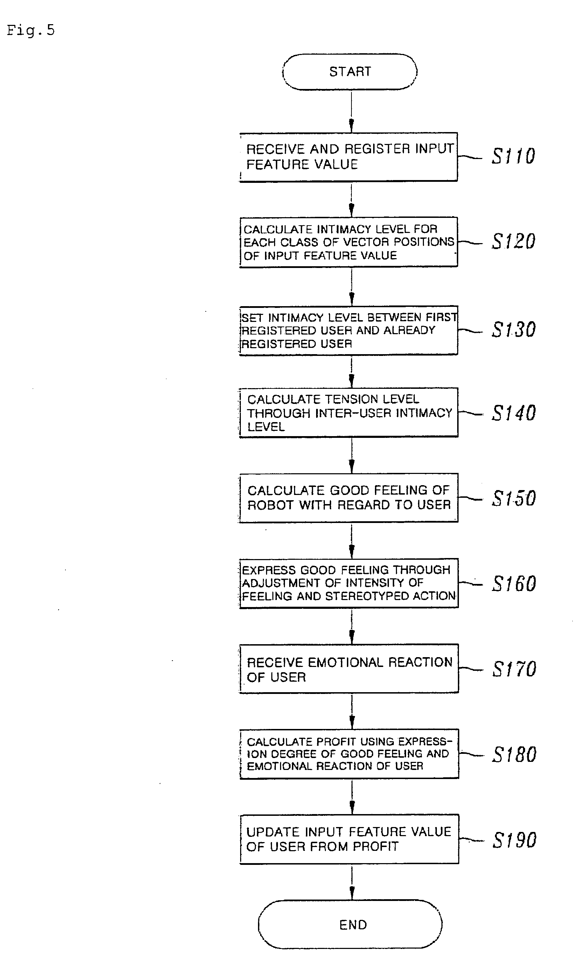

A method for forming good feeling of the robot according to one embodiment of the present invention using the apparatus R for forming good feeling of the robot will be described with reference to FIG. 5.

FIG. 5 is an overall flow chart of the method for forming good feeling of the robot according to one embodiment of the present invention. As shown in FIG. 5, the user registering module 110 of the good feeling generating unit 100 receives and registers the input feature value about the degree of control range and the degree of belonging feeling of the user (S110), and the similarity evaluating module 130 calculates the belonging value for each class of vector positions of the input feature value, that is, the intimacy level $m_{ri}$ (S120).

The inter-user intimacy level setting module 140 sets the intimacy level between the first registered user and the already registered user (S130), the sentimental relation modeling module 150 receives the intimacy level between the first registered user and the already registered user, that is, the intimacy level between the users from the inter-user intimacy level setting module 140 to calculate the tension level $B_{ri}$ formed between the robot ($r$) and the user ($i$) in relation to other users (S140), and the good feeling calculating module 160 calculates the good feeling $L_i$ of the robot with regard to the user using the individual intimacy level between the robot and the user calculated through the similarity evaluating module 130 and the tension level calculated through the sentimental relation modeling module 150 (S150).

Thereafter, the stereotyped action expressing module 210 and the feeling expressing module 220 of the good feeling expressing unit 200 expresses the good feeling through adjustment of the stereotyped action of the robot and the intensity of the feeling according to the calculated good feeling of the robot (S160).

The user reaction input module 310 of the good feeling learning unit 300 receives the emotional reaction of the user through the voice information or the touch information, etc., of the user (S170), the profit calculating module 320 calculates the profit using the expression degree of the good feeling of the robot with regard to the user calculated through the good feeling expressing unit 200 and the emotional reaction of the user (S180), and the input feature value updating unit 330 updates the input feature value of the user from the profit calculated from the profit calculating module 320 (S190).

Although the present invention has been described in detail reference to its presently preferred embodiment, it will be understood by those skilled in the art that various modifications and equivalents can be made without departing from the spirit and scope of the present invention, as set forth in the appended claims.

**Claims**

1. An apparatus for forming good feeling of a robot comprising:

   a good feeling generating unit 100 receiving an input feature value of a user to calculate an individual intimacy level between the robot and the user and calculate a tension level $B_{ri}$ formed between the robot (r) and the user (i) in relation to other users, thereby calculating the good feeling of the robot with regard to the user;
   a good feeling expressing unit 200 adjusting intensity of feeling of the robot according to the good feeling of the robot generated through the good feeling generating unit 100 and additionally expressing an action expressing the good feeling before and after an action of the robot; and
   a good feeling learning unit 300 receiving an expression degree of the good feeling of the robot with regard to the user calculated through the good feeling expressing unit 200 and an emotional reaction of the user to calculate profit using a difference between these two information and updating the input feature value of the user using the profit.

2. The apparatus according to claim 1, wherein the good feeling generating unit 100 comprises:

   a user registering module 110 receiving and registering the input feature value about a degree of control range and a degree of belonging feeling of the user,
   a user preference modeling module 120 storing a user model preferred by the robot;
   a similarity evaluating module 130 calculating an intimacy level $m_{ri}$ for each class of vector positions of the input feature value;
   an inter-user intimacy level setting module 140 setting the intimacy level between a first registered user and an already registered user;
   a sentimental relation modeling module 150 receiving the intimacy level between the first registered user and the already registered user from the inter-user intimacy level setting module 140 to calculate the tension level $B_{ri}$ formed between the robot (r) and the user (i) in relation to other users; and
   a good feeling calculating module 160 calculating the good feeling $L_i$ of the robot with regard to the user using the individual intimacy level between the robot and the user calculated through the similarity evaluating module 130 and the tension level calculated through the sentimental relation modeling module 150.

3. The apparatus according to claim 2, wherein the good feeling ($L_i=[0, 1]$) of the robot with regard to the user is calculated through the individual intimacy level $m_{ri}$ between the robot and the user and a weight ($\lambda=[0, 1]$) of the tension level $B_{ri}$.

4. The apparatus according to claim 2, wherein the user preference modeling module 120 is constituted by a hyper box model made of the input feature value, and the hyper box model is formed as hyper boxes with regard to a class with a high preference (liking class, c1) and a class with a low preference (disliking class, c2).

5. The apparatus according to claim 1, wherein the good feeling expressing unit 200 comprises:

   a stereotyped action expressing module 210 additionally expressing an action expressing the good feeling before and after the action of the robot; and
   a feeling expressing module 220 adjusting and expressing intensity of the feeling generated in a feeling generating module by a current event according to a level of the good feeling.

6. The apparatus according to claim 5, wherein the stereotyped action is a fixed action defined to be able to express a personality or a feeling state of the robot before and after a main action for performing service of the robot.

7. The apparatus according to claim 1, wherein the good feeling learning unit 300 comprises:

   a user reaction inputting module 310 receiving an emotional reaction of the user through voice information or touch information of the user;
   a profit calculating module 320 calculating the profit using the expression degree of the good feeling calculated through the good feeling expressing unit 200 and the emotional reaction of the user comprising the voice information or the touch information of the user inputted through the user reaction inputting module 310; and
   an input feature value updating module 330 updating the input feature value of the user from the profit calculated from the profit calculating module 320.

8. The apparatus according to claim 1, wherein the user reaction inputting module 310 recognizes feeling states of the users as one selected from gladness, anger, and indifference through voice information or touch information of the users and evaluates the feeling states of the users in terms of a positive reward and a negative punishment.

9. A method for forming good feeling of a robot comprising:

   (a) receiving and registering an input feature value about a degree of control range and a degree of belonging feeling of the user by a good feeling generating unit 100;
   (b) calculating an intimacy level $m_{ri}$ for each class of vector positions of the input feature value by the good feeling generating unit 100;
   (c) setting the intimacy level between a first registered user and an already registered user to calculate a tension level $B_{ri}$ formed between the robot ($r$) and the user (i) in relation to other users by the good feeling generating unit 100;
   (d) calculating the good feeling $L_i$ of the robot with regard to the user using the individual intimacy level between the robot and the user calculated by the good feeling generating unit 100 through the step (b) and the tension level calculated through the step (c);
   (e) adjusting intensity of feeling and a stereotyped action of the robot according to the good feeling of the robot calculated through the good feeling generating unit 100 to express the good feeling by a good feeling expressing unit 200;
   (f) receiving an emotional reaction of the user through voice information or touch information of the user by a good feeling learning unit 300;
   (g) calculating profit using an expression degree of the good feeling of the robot with regard to the user calculated through the good feeling expressing unit 200 and the emotional reaction of the user by the good feeling learning unit 300; and
   (h) updating the input feature value of the user from the calculated profit by the good feeling learning unit 300.

10. The method according to claim 9, wherein in the step (d), the good feeling ($L_i$=[0, 1]) of the robot with regard to the user is calculated through the individual intimacy level $m_{ri}$ between the robot and the user and a weight ($\lambda$ = [0, 1]) of the tension level $B_{ri}$.

11. The method according to claim 9, wherein in the step (b), the input feature value is formed as a hyper box with regard to a class with a high preference (liking class, c1) and a class with a low preference (disliking class, c2).

12. The method according to claim 9, wherein in the step (e), the stereotyped action is a fixed action defined to be able to express a personality or a feeling state of the robot before and after a main action for performing service of the robot.

Fig.1

Fig.2

Fig.3

Fig.4

Fig.5

```
          ┌─────────────┐
          │    START    │
          └──────┬──────┘
                 │
    ┌────────────▼───────────┐
    │ RECEIVE AND REGISTER INPUT │──── S110
    │ FEATURE VALUE          │
    └────────────┬───────────┘
                 │
    ┌────────────▼───────────┐
    │ CALCULATE INTIMACY LEVEL FOR │
    │ EACH CLASS OF VECTOR POSITIONS │──── S120
    │ OF INPUT FEATURE VALUE │
    └────────────┬───────────┘
                 │
    ┌────────────▼───────────┐
    │ SET INTIMACY LEVEL BETWEEN FIRST │
    │ REGISTERED USER AND ALREADY │──── S130
    │ REGISTERED USER │
    └────────────┬───────────┘
                 │
    ┌────────────▼───────────┐
    │ CALCULATE TENSION LEVEL │
    │ THROUGH INTER-USER INTIMACY │──── S140
    │ LEVEL │
    └────────────┬───────────┘
                 │
    ┌────────────▼───────────┐
    │ CALCULATE GOOD FEELING OF │
    │ ROBOT WITH REGARD TO USER │──── S150
    └────────────┬───────────┘
                 │
    ┌────────────▼───────────┐
    │ EXPRESS GOOD FEELING THROUGH │
    │ ADJUSTMENT OF INTENSITY OF │──── S160
    │ FEELING AND STEREOTYPED ACTION │
    └────────────┬───────────┘
                 │
    ┌────────────▼───────────┐
    │ RECEIVE EMOTIONAL REACTION │──── S170
    │ OF USER │
    └────────────┬───────────┘
                 │
    ┌────────────▼───────────┐
    │ CALCULATE PROFIT USING EXPRESS- │
    │ ION DEGREE OF GOOD FEELING AND │──── S180
    │ EMOTIONAL REACTION OF USER │
    └────────────┬───────────┘
                 │
    ┌────────────▼───────────┐
    │ UPDATE INPUT FEATURE VALUE │──── S190
    │ OF USER FROM PROFIT │
    └────────────┬───────────┘
                 │
          ┌──────▼──────┐
          │     END     │
          └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 20080037971